# EUROPÄISCHE PATENTSCHRIFT

(11) **EP 1 287 655 B1**
(45) Veröffentlichungstag und Bekanntmachung des Hinweises auf die Patenterteilung: **23.06.2004**
(21) Anmeldenummer: 01903686.2
(22) Anmeldetag: 01.02.2001
(51) Int. Cl.: H04L 29/06, G06F 1/00, H04L 9/32

(54) **VERFAHREN ZUR AUTHENTIZITÄTSSICHERUNG VON HARD- UND SOFTWARE IN EINEM VERNETZTEN SYSTEM**
METHOD FOR SECURING THE AUTHENTICITY OF HARDWARE AND SOFTWARE IN A NETWORK
PROCEDE DE SECURISATION DE L'AUTHENTICITE DE LOGICIELS ET D'EQUIPEMENTS INFORMATIQUES DANS UN SYSTEME MIS EN RESEAU

(30) Priorität: 15.02.2000 EP 00103075
(43) Veröffentlichungstag der Anmeldung: 05.03.2003
(73) Patentinhaber: Infineon Technologies AG, 81669 München (DE)
(72) Erfinder: EITEL, Peter, 85649 Brunnthal (DE); VON DER HEIDT, Guido, 86899 Landsberg/Lech (DE); RETZOW, Uwe, 81739 München (DE)
(74) Vertreter: Schoppe, Fritz, Dipl.-Ing.
(86) Internationale Anmeldenummer: PCT/EP2001/001055
(87) Internationale Veröffentlichungsnummer: WO 2001/061961

(56) Entgegenhaltungen:
- EP-A- 0 848 316
- US-A- 4 723 284
- US-A- 5 742 512
- BONNENBERG H ET AL: "VINCI: SECURE TEST OF A VLSI HIGH-SPEED ENCRYPTION SYSTEM" PROCEEDINGS OF THE INTERNATIONAL TEST CONFERENCE,US,NEW YORK, IEEE, Bd. -, 1993, Seiten 782-790, XP000437190

## Beschreibung

Die Erfindung betrifft ein Verfahren gemäß dem Oberbegriff des Patentanspruchs 1.

Ein solches System kann beispielsweise durch folgende Szenarien gebildet werden:
- System zur Fernabfrage von Stromzähler-Ständen über die Powerline beziehungsweise das stromversorgungsnetz,
- Datenbank-server mit Zugriffen über Clients,
- Client-/Server-Konfiguration mit internem Datenaustausch,
- Ferneinstellung von Geräten,
- Fernabfrage von Kontoständen,
- System in einem Fahrzeug mit vernetzten Prozessoren/Micro-Controllern, insbesondere Motorsteuerung, Alarmanlage oder zentrale Türsicherung,
- usw.

Allgemein bekannt sind symmetrische und asymmetrische Verschlüsselungsverfahren, mit denen ein sicherer Nachrichtenkanal zwischen Kommunikationsteilnehmern gebildet wird. Weiter sind symmetrische und asymmetrische Verfahren, wie beispielsweise eine digitale Signatur oder ein Message Authentication Code (MAC), allgemein gebräuchlich, mit der die Authentizität und/oder die Integrität einer Nachricht, eines Teilnehmers, oder auch ein Schlüssel von einer Empfangsstelle überprüft werden kann. Allgemeine Grundlagen sind beispielsweise in dem Buch '"Kryptografie" von W. Fumy und H. P. Rieß, Entwurf und Analyse symmetrischer Kryptosysteme, R. Oldenbourg Verlag München, Wien, 1988, beschrieben.

Das US-Patent Nr. 4,723,284 offenbart ein Authentifikationssystem, bei dem ein Benutzer-Terminal und ein Hardware-Authentifikations-Terminal bzw. ein Software- Authentifikations-Tarminal beide an einem Datenkommunikationsmedium angekoppelt sind. Zur Überprüfung der Authentifikation des Benutzer-Terminals erzeugt der Authentifikations-Terminal eine verschlüsselte Nachricht, die durch Verschlüsseln einer Klartext-Nachricht mit einem öffentlichen Schlüssel des Benutzer-Terminals gebildet wird. Diese verschlüsselte Nachricht wird zum Benutzer-Terminal übermittelt, der dann, mit seinem privaten Schlüssel, die verschlüsselte Nachricht entschlüsselt und die entschlüsselte Nachricht zurück zum Authentifikations-Terminal schickt, der dann die unverschlüsselte Nachricht vom Benutzer-Terminal mit seiner eigenen gespeicherten unverschlüsselten Nachricht vergleicht, um eine Authentifikation anzuerkennen, wenn die vom Benutzer-Terminal erhaltene unverschlüsselte Nachricht mit der im Authentifikätions-Terminal gespeicherten verschlüsselten Nachricht übereinstimmt. Eine entsprechende Vorgehensweise gibt es für die Software-Authentifikation, indem Zwei-Wege-Verifikationen angesprochen werden, in denen die Rollen des Benutzer-Terminals und des Authentifikations-Terminals vertauscht sind.

Die EP 0 848 316 A2 offenbart ein System und ein Verfahren zur sicheren Informationsübertragung über ein Netz. Ein Computernetz-System hat eine Mehrzahl von Knoten, wobei einer der Administratorknoten ist. Der Administratorknoten dient zum sicheren Empfangen von Code-Informationen von einem Code-Anbieter, der außerhalb des Netzwerksystems angeordnet ist, und zum sicheren Senden der Code-Informationen zu zumindest einem der Knoten. Ein solcher Code ist beispielsweise ein Zentral-Code bzw. BIOS-Code für einen Prozessor, der in einem Knoten sitzt.

Der Erfindung liegt die Aufgabe zugrunde, ein gegen unbefugte Manipulationen geschütztes vernetztes System zu schaffen.

Diese Aufgabe wird erfindungsgemäß durch ein vernetztes System gemäß Patentanspruch 1 gelöst.

Erfindungsgemäß sind die Hard- und Software-Bausteine eines Systems insbesondere während des Wirkbetriebes gegen unbefugte Veränderung geschützt in beziehungsweise werden Manipulationen erkannt.

Bei einer Weiterbildung des erfindungsgemäßen Systems ist der externe Zugriff auf die Bausteine des Systems gesichert. Dies umfaßt unter Anderem den Austausch oder die Erneuerung von Systemkomponenten beziehungsweise als Teile davon Hardund Software-Bausteine.

Weitere vorteilhafte Ausgestaltungen sind in den Unteransprüchen angegeben.

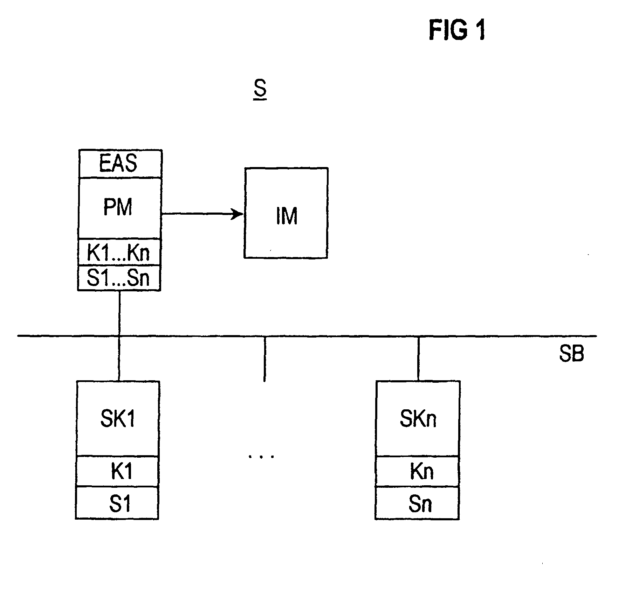

Im Folgenden wird die Erfindung anhand eines in der Zeichnung dargestellten Ausführungsbeispieles beschrieben.

In der einzigen Figur ist ein System S dargestellte das über einen Systembus SB verbundene Systemkomponenten SK1 bis SKn aufweist. Die Systemkomponenten SK1 bis SKn weisen nicht näher angegebene Hardware- und Softwaremodule auf, die gemäß den spezifischen Aufgaben der jeweiligen Systemkomponente SK1 bis SKn ausgebildet sind.

Die Systemkomponenten SK1 bis SKn werden beispielsweise durch personalcomputer, Drucker und Server, aber auch durch Bausteine in einer Motorsteuerung, wie beispielsweise Prozessor und Speicherbausteine realisiert.

Erfindungsgemäß ist im System S ein zentrales Prufmodul PM vorgesehen, das mit dem Systembus SB verbunden ist. weiter sind die Hardware-Module in den Systemkomponenten SK1 bis SKn mit Authentifizierungsmerkmalen K1 bis Kn versehen. Des Gleichen weisen die Software-Module der Systemkomponenten SK1 bis SKn weitere Authentifizierungs- beziehungsweise Integritätssicherungsmerkmale S1 bis Sn auf.

Die Speicherung der Integritätssicherungsmerkmale S1 bis Sn ist optional gemäß der Ausprägung des Systems S.

Die Authentifizierungsmerkmale K1 bis Kn beziehungsweise die Integritätssicherungsmerkmale S1 bis Sn werden vorzugsweise am Ende des Entwicklungsprozesses der jeweiligen Module vor der Auslieferung erzeugt. Das Authentifizierungsmerkmal (K1 bis Kn) ist beispielsweise die Seriennummer einer Hardwareschaltung, und kann beispielsweise zusätzlich mit einem Datum versehen sein. Die Integritätssicherungsmerkmale S1 bis Sn sind vorzugsweise digitale Signaturen unter Verwendung eines Public Key Verfahrens oder symmetrische Authentizitäts- beziehungsweise Integritätscodes (MAC, Message Authentication Codes) die von einer vertrauenswürdigen Instanz erzeugt werden

Die Hardware-Software-Bausteine des jeweiligen Systems S werden im Wirkbetrieb überprüft. Die Überprüfung kann durch ein sogenanntes Trap, das heisst, durch eine Aufforderung einer der Systemkomponenten SK1 bis SKn hin erfolgen. Die Überprüfung kann auch durch ein sogenanntes Polling, das heisst, auf eine Aufforderung des Prüfmoduls PM hin erfolgen. Die Überprüfung der Authentifizierungsmerkmale K1 bis Kn beziehungsweise der Integritätssicherungsmerkmale S1 bis Sn erfolgt in jedem Fall zentral im Prüfmodul PM. Die Überprüfung kann beispielsweise durch ein Herunterfahren beziehungsweise Ausschalten des Systems S, aber auch beispielsweise in bestimmten Zeitabständen während des Betriebes durchgeführt werden.

Beim Erkennen von Inkonsistenzen kann das System S beispielsweise abgeschaltet werden. Es ist auch möglich, eine mehr oder weniger detaillierte Meldung an einem Informationsmodul IM auszugeben. Hierzu ist das Informationsmodul IM beispielsweise direkt mit dem Prüfmodul PM verbunden.

Bei einer Weiterbildung der Erfindung weist das Prüfmodul PM eine Eingabe-Ausgabe-Schnittstelle EAS auf. Diese Schnittstelle EAS bildet den einzigen Zugang zum System S. Das heisst, über diese Schnittstelle EAS erfolgt ein externer Zugriff auf Daten und Funktionen des Systems S. Hierbei erfolgt jeweils eine Authentifizierung und eine Überprüfung der Zugriffsrechte der zugreifenden Person beziehungsweise Instanz.

Eine weitere Zugriffsart ist beispielsweise der Software-Update von entsprechenden Modulen in den Systemkomponenten SK1 bis SKn. Hierbei erfolgt wiederum eine Überprüfung der zugreifenden Person beziehungsweise Instanz, sowie eine Klärung der Rechte, das entsprechende Update durchzuführen. Ferner erfolgt eine erste Überprüfung des jeweiligen Authentizitäts- beziehungsweise des betreffenden Integritätssicherungsmerkmals (S1 - Sn) der Software. Analoges gilt für den Austausch von Hardware-Modulen in den Systemkomponenten SK1 bis SKn.

Im Folgenden werden weitere Ausgestaltungen der Erfindung beschrieben.

So kann der Datenaustausch bei der Überprüfung der Authentifizierungsmerkmale K1 bis Kn, sowie der weiteren Authentifizierungs- beziehungsweise Integritätssicherungsmerkmale S1 bis Sn zwischen dem zentralen Prüfmodul PM und den jeweiligen Systemkomponenten SK1 bis SKn gesichert werden. Die Sicherung kann durch eine interne digitale Signatur oder durch einen MAC (Message Authentication Code) durchgeführt werden. Zusätzliche können die ausgetauschten Datensätze verschlüsselt werden. Die systemintern verwendeten kryptografischen Funktionen sind unabhängig von den kryptografischen Mechanismen, mit denen beispielsweise die Authentifizierungsmerkmale K1 bis Kn und die Integritätssicherungsmerkmale S1 bis Sn erzeugt wurden. Insbesondere müssen diese Mechanismen nicht in den Systemkomponenten SK1 bis SKn implementiert werden, und es kann weiter intern ein autarkes Schlüsselmanagement verwendet werden. Als Schlüsselverteilzentrale kann das Prüfmodul PM mit einer entsprechenden Ausgestaltung fungieren.

Bei einer weiteren Ausgestaltung der Erfindung kann die Bildung der Authentifizierungsmerkmale K1 bis Kn der Hardwaremodule ebenfalls von systeminternen Kryptofunktionen übernommen werden. Hierbei werden beispielsweise die Authentifizierungsmerkmale K1 bis Kn in einem Initialisierungsschritt von dem jeweiligen System S selbst erzeugt. Auch dies kann zentral im Prüfmodul PM durchgeführt werden.

Extern und intern können entsprechend den jeweiligen Sicherheitsanforderungen sowohl symmetrische als auch asymmetrische Kryptoverfahren angewendet werden.

## Patentansprüche

1. Vernetztes System (S) mit folgenden Merkmalen:
einem Systembus (SB);
systemkomponenten (SK1...SKn), wobei die Systemkomponenten über den Systembus verbunden sind und Hardware- und Software-Module aufweisen,
wobei jede Systemkomponente (SK1...SKn) ein Authentifizierungsmerkmal (K1...Kn) für ein Hardware-Modul oder ein Integritätssicherungsmerkmal (S1...Sn) für ein Software-Modul aufweist;
ein am Systembus (SB) angeschaltetes, zentrales Prüfmodul (PM) zur zentralen Überprüfung der Authentifizierungsmerkmale (K1...Kn) und/oder der Integritätssicherungsmerkmale (S1...Sn) ; und
eine Eingabe-Ausgabe-Schnittstelle (EAS) zum Zugriff auf Daten und Funktionen des Systems von einer externen Instanz,
wobei die Eingabe-Ausgabe-Schnittstelle in dem Prüfmodul (PM) ausgebildet ist,
wobei die Eingabe-Ausgabe-Schnittstelle die einzige externe Zugriffsmöglichkeit auf das System (S) bildet, und
wobei das Prüfmodul (PM) ferner ausgebildet ist, um eine Authentifizierung einer einen externen Zugriff durchführenden Instanz und eine Überprüfung von Zugriffsrechten der einen externen Zugriff durchführenden Instanz auf das System durchzuführen, wobei der externe Zugriff auf das System (S) nur über die Eingabe-Ausgabe-Schnittstelle durchführbar ist.

2. System nach Anspruch 1, das ferner ein mit dem Prüfmodul (PM) verbundenes Informationsmodul (IM) zur Ausgabe von Meldungen des Prüfmoduls aufweist.

3. System nach einem der vorhergehenden Ansprüche, bei dem der Datenaustausch zur Prüfung der Authentifizierungsmerkmale (K1...Kn) oder der Integritätssicherungsmarkmale (S1...Sn) zwischen dem Prüfmodul (PM) und jeweils einer der Systemkomponenten (SK1...SKn) durch digitale Signaturen oder MACs (Message Authentication Codes) und/oder Verschlüsselung geschützt wird.

4. System nach einem der vorhergehenden Ansprüche, bei dem das Prüfmodul ausgebildet ist, um für eine über die Eingabe-Ausgabe-Schnittstelle (EAS) des Prüfmoduls (PM) in das System (S) eingespielte Software das zugehörige Integritätssicherungsmerkmale (S1 - Sn) zu prüfen, wobei die Software digital signiert oder durch einen MAC geschützt und/oder verschlüsselt ist und zu einer der Systemkomponenten (SK1...SKn) übertragen wird.

5. System nach Anspruch 3 oder 4, bei dem die interne digitale Signatur und/oder MAC-Sicherung und/oder Verschlüsselung autark im System (S) durchgeführt wird.

6. System nach einem der vorhergehenden Ansprüche, bei dem in einem Initialisierungssehritt die Authentifizierungsmerkmale (K1...Kn) der Hardware-Module der Systemkomponenten (SK1 ... SKn) systemintern erzeugt werden.

7. System nach einem der vorhergehenden Ansprüche, bei dem das Authentifizierungsmerkmal eines Hardware-Moduls in einer Systemkomponente die Seriennummer des Hardware-Moduls ist, und/oder bei dem das Integritätssicherungsmerkmal eines Software-Moduls in einer Systemkomponente eine unter Verwendung eines Publie-Key-Verfahrens erzeugte digitale Signatur oder ein von einer vertrauenswürdigen Instanz erzeugter Integritätscode ist.

8. System nach einem der vorhergehenden Ansprüche, bei dem die Authentifizierungsmerkmale und die Integritätssicherungsmerkmale in dem Prüfmodul vorhanden sind.

9. System nach Anspruch 1, bei dem das Prüfmodul ausgebildet ist, um eine Aufforderung an die Systemkomponenten auszugeben, so daß eine Uberprüfung der Authentifizierungsmerkmale und der Integritätssicherungsmerkmale der Systemkomponenten erfolgen wird

10. System nach Anspruch 1, das als System zur Fernabfrage von Stromzähler-Ständen, als Datenbank-Server mit Zugriffen über Clients, als Client/Server-Konfiguration mit internem Datenaustausch, als System zur Ferneinstellung von Geräten, als System zur Fernabfrage von Kontoständen oder als System in einem Fahrzeug mit vernetzten Prozessoren/Microcontrollern, insbesondere Motorsteuerung, Alarmanlage oder zentrale Türsicherung, ausgebildet ist.

## Claims

1. A networked system (S), comprising:
a system bus (SB)
system components (SK1 ... SKn), wherein the system components are connected via the system bus and comprise hardware and software modules,
wherein each system component (SK1...SKn) comprises an authentication feature (K1...Kn) for a hardware module or an integrity securing feature (S1...Sn) for a software module;
a central testing module (PM) attached to the system bus (SB) for centrally testing the authentication features (K1...Kn) and/or the integrity securing features (S1...Sn) ; and
an input/output interface (EAS) for accessing data and functions of the system from an external entity,
wherein the input/output interface is implemented within the testing module (PM),
wherein the input/output interface forms the only external accessing possibility to the system (S), and
wherein the testing module (PM) is further implemented in order to perform an authentication of an entity performing an external access and a testing of the access rights of the entity performing an external access to the system, wherein the external access to the system (S) is only performable via the input/output interface.

2. The system according to claim 1, further comprising an information module (IM) connected to the testing module (PM) for outputting messages of the testing module.

3. The system according to one of the preceding claims, wherein the data exchange for testing the authentication features (K1...Kn) or the integrity securing features (S1...Sn) is protected between the testing module (PM) and one of the respective system components (SK1...SKn) by digital signatures or MACs (Message Authentication Codes) and/or encryption.

4. The system according to one of the preceding claims, wherein the testing module is implemented in order to test the associated integrity securing features (S1...Sn) for a software imported into the system (S) via an input/output interface (EAS) of the testing module (PM), wherein the software is digitally signed or protected by a MAC and/or encrypted and transferred to one of the system components (SK1...SKn).

5. The system according to claim 3 or 4, wherein the internal digital signature and/or MAC-securing and/or encryption is performed self-sufficiently within the system (S).

6. The system according to one of the preceding claims, wherein in an initialisation step the authentication features (K1...Kn) of the hardware modules of the system components (SK1...SKn) are created in the system.

7. The system according to one of the preceding claims, wherein the authentication feature of a hardware module in a system component is the serial number of the hardware module and/or wherein the integrity securing feature of a software module in a system component is a digital signature generated using a public key method or an integrity code generated by a trusted entity.

8. The system according to one of the preceding claims, wherein the authentication features and the integrity securing features are present within the testing module.

9. The system according to claim 1, wherein the testing module is implemented in order to output a request to the system components, so that a testing of the authentication features and the integrity securing features of the system components will be performed.

10. System according to claim 1, implemented as a system for a remote query of electricity meter readings, as a database server with accesses via clients, as a client/server configuration comprising internal data exchange, as a system for a remote setting of devices, as a system for a remote inquiry of account balances or as a system in a vehicle having networked processors/microcontrollers, in particular motor control, alarm system or central door safety system.

## Revendications

1. Système en réseau (S) présentant les caractéristiques suivantes :
un bus de système (SB);
des composants de système (SK1 à SKn), les composants de système étant reliés par l'intermédiaire du bus de système et comportant des modules matériels et logiciels,
chaque composant de système (SK1 à SKn) comportant une caractéristique d'authentification (K1 à Kn) pour un module matériel ou une caractéristique de garantie d'intégrité (S1 à Sn) pour un module logiciel ;
un module de contrôle central (PM), raccordé au bus de système (SB), pour la vérification centrale des caractéristiques d'authentification (K1 à Kn) et/ou des caractéristiques de garantie d'intégrité (S1 à Sn) ; et
une interface d'entrée et de sortie (EAS) pour l'accès à des données et à des fonctions du système par une instance externe,
l'interface d'entrée et de sortie étant conçue dans le module de contrôle (PM),
l'interface d'entrée et de sortie constituant la seule possibilité d'accès au système (S), et
le module de contrôle (PM) étant aussi conçu pour mettre en oeuvre une authentification d'une instance exécutant un accès externe et pour mettre en oeuvre une vérification de droits d'accès, de l'instance exécutant un accès externe, au système, l'accès externe au système (S) pouvant être réalisé seulement par l'intermédiaire de l'interface d'entrée et de sortie.

2. Système selon la revendication 1, qui comporte en plus un module d'information (IM) qui est relié au module de contrôle (PM) et qui est destiné à la délivrance d'avis du module de contrôle.

3. Système selon l'une des revendications précédentes, dans lequel l'échange de données pour la vérification des caractéristiques d'authentification (K1 à Kn) ou des caractéristiques de garantie d'intégrité (S1 à Sn) entre le module de contrôle (PM) et à chaque fois l'un des composants de système (SK1 à SKn) est protégé par des signatures numériques ou par des codes dits MAC (Message Authentication Codes) et/ou par cryptage.

4. Système selon l'une des revendications précédentes, dans lequel le module de contrôle est conçu pour vérifier, pour un logiciel installé dans le système (S) par l'intermédiaire de l'interface d'entrée et de sortie (EAS) du module de contrôle (PM), les caractéristiques de garantie d'intégrité (S1 à Sn) associées, le logiciel ayant une signature numérique ou étant protégé par un MAC et/ou étant crypté et étant transmis à l'un des composants de système (SK1 à SKn).

5. Système selon la revendication 3 ou 4, dans lequel la signature numérique interne et/ou la garantie MAC et/ou le cryptage sont réalisés de manière autonome dans le système (S).

6. Système selon l'une des revendications précédentes, dans lequel les caractéristiques d'authentification (K1 à Kn) des modules matériels des composants de système (SK1 à SKn) sont produites de manière interne au système lors d'une étape d'initialisation.

7. Système selon l'une des revendications précédentes, dans lequel la caractéristique d'authentification d'un module matériel dans un composant de système est le numéro de série du module matériel et/ou dans lequel la caractéristique de garantie d'intégrité d'un module logiciel dans un composant de système est une signature numérique produite en utilisant un procédé à clé publique ou un code d'intégrité produit par une instance digne de confiance.

8. Système selon l'une des revendications précédentes, dans lequel les caractéristiques d'authentification et les caractéristiques de garantie d'intégrité sont présentes dans le module de contrôle.

9. Système selon la revendication 1, dans lequel le module de contrôle est conçu pour délivrer une demande aux composants de système de telle sorte qu'une vérification des caractéristiques d'authentification et des caractéristiques de garantie d'intégrité des composants de système est effectuée.

10. Système selon la revendication 1, qui est conçu comme un système pour l'interrogation à distance d'états de compteur de courant, comme un serveur de base de données avec accès via des clients, comme une configuration client / serveur avec échange de données interne, comme un système pour le réglage à distance d'appareils, comme un système pour l'interrogation à distance d'états de compte ou comme un système dans un véhicule avec processeurs / microcontrôleurs mis en réseau, notamment comme une commande de moteur, une installation d'alarme ou un verrouillage central des portes.
